# EUROPÄISCHE PATENTSCHRIFT

(11) **EP 1 283 931 B1**
(45) Veröffentlichungstag und Bekanntmachung des Hinweises auf die Patenterteilung: **13.05.2009**
(21) Anmeldenummer: 01929555.9
(22) Anmeldetag: 12.04.2001
(51) Int. Cl.: E04F 13/14, E06B 3/54, F16B 13/08

(54) **Befestigungselement für einen plattenförmigen Mehrschichtkörper, insbesondere ein Mehrscheibenglas oder ein Solarpaneel, und Anordnung mit dem in einem plattenförmigen Mehrschichtkörper verankerten Befestigungselement**
Fixing element for a plate-shaped multilayered body, in particular a laminated glass or a solar panel, and an assembly comprising said fixing element anchored in such a body
Elément de fixation pour un corps multicouche en forme de plaque, en particulier un verre feuilleté ou un panneau solaire, et agencement comportant cet élément de fixation ancré dans un tel corps

(30) Priorität: 13.05.2000 DE 20008684 U
(43) Veröffentlichungstag der Anmeldung: 19.02.2003
(73) Patentinhaber: fischerwerke GmbH & Co. KG, 72178 Waldachtal (DE)
(72) Erfinder: LIND, Stefan, 72178 Waldachtal (DE)
(86) Internationale Anmeldenummer: PCT/EP2001/004238
(87) Internationale Veröffentlichungsnummer: WO 2001/088305

(56) Entgegenhaltungen:
- EP-A- 0 647 760
- WO-A-95/16098
- DE-U- 29 720 458
- US-A- 4 214 416

## Beschreibung

Die Erfindung betrifft ein Befestigungselement mit den Merkmalen des Oberbegriffs des Anspruchs 1, das zur Verankerung in einem eine Hinterschneidung aufweisenden Bohrloch in einem plattenförmigen Mehrschichtkörper, insbesondere einem Mehrscheibenglas oder einem Solarpanel vorgesehen ist. Des Weiteren betrifft die Erfindung eine Anordnung des in einem Mehrschichtkörper verankerten Befestigungselements mit den Merkmalen des Oberbegriffs des Anspruchs 4.

Ein Befestigungselement zur Verankerung einer Fassadenplatte, die eine nur geringe Bohrlochtiefe zulässt, ist bekannt aus der EP 0 440 896 B1. Das bekannte Befestigungselement weist einen Gewindeschaft mit einem Spreizkonus auf. Auf den Gewindeschaft ist ein Spreizelement aufgesetzt, das durch Aufschieben auf den Spreizkonus aufgeweitet wird und dadurch die Hinterschneidung des Bohrlochs formschlüssig hintergreift. Das Spreizelement des bekannten Befestigungselements ist als Spreizring ausgebildet, der beispielsweise in Draufsicht eine ovale Form und/oder in Seitenansicht gewellt ist und sich dadurch durch Aufschieben auf den Spreizkonus aufweiten lässt. Durch das Aufweiten des Spreizelements wird das Befestigungselement in der Hinterschneidung des Bohrlochs verankert.

Nach dem Verankern des Befestigungselements wird eine Unterlegscheibe auf den Gewindeschaft aufgesetzt, die das Bohrloch abdeckt, und eine Mutter auf den Gewindeschaft geschraubt.

Soll das bekannte Befestigungselement in einem Mehrscheibenglas verankert werden, tritt folgendes Problem auf: Das Mehrscheibenglas (Sicherheitsglas) ist aus miteinander verklebten Glasscheiben zusammengesetzt. Allgemeiner lässt sich das Mehrscheibenglas als Mehrschichtkörper, der aus mehreren Schichten zusammengesetzt ist, verstehen. Ein solcher Mehrschichtkörper wäre beispielsweise auch ein Solarpaneel, für das die Erfindung ebenso wie für ein Mehrscheibenglas anwendbar ist. Das Bohren des Bohrlochs im Mehrschichtkörper erfolgt vor dem Verbinden der einzelnen Schichten zu dem Mehrschichtkörper. Es tritt das Problem auf, dass die Bohrlöcher in den einzelne Schichten nach dem Zusammensetzen der Schichten zum Mehrschichtkörper durch Versatz der Schichten zueinander versetzt sind.

Aus der Druckschrift DE 297 20 458 U1 ist zwar ein Befestigungselement der e.g. Gattung sowie eine Anordnung in einem Mehrschichtkörper bekannt, mit einem durch ein Bohrloch in einer äußeren Schicht hindurch in einem hinterschnittenen Bohrloch einer inneren Schicht verankerten Befestigungselement, allerdings wird dabei davon ausgegangen, dass die Bohrlöcher in den beiden Schichten des Mehrschichtkörpers ideal fluchten. Wäre dies nicht der Fall, wäre das Befestigungselement nicht einsetzbar.

Aus der Druckschrift US 4,214,416 ist es bekannt, eine Ankerstange in einem großen Bohrloch mittels einer aushärtbaren Masse zu verankern. Dabei ist der Anker im Bereich der Bohrlochmündung von einer Scheibe umfasst, welche die Bohrlochmündung schließt. Zum Einfüllen der Masse weist die Scheibe eine Einfüllbohrung sowie eine Entlüftungsbohrung auf.

Der Erfindung liegt die Aufgabe zugrunde, ein Befestigungselement der eingangs erläuterten Art sowie eine entsprechende Anordnung mit dem in einem plattenförmigen Mehrschichtkörper verankerten Befestigungselement zu schaffen, welche einen Versatz von Bohrlöchern zueinander in den einzelnen Schichten erlaubt.

Diese Aufgabe wird erfindungsgemäß durch die Merkmale des Anspruchs 1 gelöst. Beim erfindungsgemäßen Befestigungselement mit den Merkmalen des Anspruchs 1 weist die auf den Gewindeschaft aufgesetzte Unterlegscheibe eine Injektionsöffnung auf. Die Injektionsöffnung ist auf einer Außenseite der Unterlegscheibe zugänglich und mündet auf einer dem Spreizkonus zugewandten Seite der Unterlegscheibe im Umfangsbereich des Gewindeschafts. Die Außenseite, auf der die Injektionsöffnung zugänglich ist, muss nicht eine Stirnfläche der Unterlegscheibe, sondern kann auch der Umfang sein. Durch die Injektionsöffnung lässt sich eine Füllmasse in einen Zwischenraum zwischen dem Gewindeschaft des Befestigungselements und einer Bohrlochwandung einbringen. Dies ermöglicht es, das Bohrloch in einer äußeren Schicht des Mehrschichtkörpers mit einem größeren Durchmesser als dem Gewindeschaft des Befestigungselements und dem Bohrloch in einer weiteren Schicht des Mehrschichtkörpers zu bohren. Dadurch wird sichergestellt, dass auch bei Versatz der Schichten des Mehrschichtkörpers das Bohrloch in der äußeren Schicht in das Bohrloch in der weiteren Schicht mündet und dass die Überdeckung der Bohrlöcher in der äußeren und der weiteren Schicht so groß ist, dass das Befestigungselement mit dem Spreizkonus in die Hinterschneidung des Bohrlochs einsetzbar ist. Nach der Verankerung des erfindungsgemäßen Befestigungselements lässt sich ein Zwischenraum zwischen dem Gewindeschaft des Befestigungselements und einer Wandung des im Durchmesser größeren Bohrlochs in der äußeren Schicht des Mehrschichtkörpers durch die Injektionsöffnung mit einer Füllmasse verfüllen. Die Füllmasse ist insbesondere eine Dichtmasse wie beispielsweise Silicon, die den Bohrlochschaft im Bohrloch abdichtet. Auch ist es möglich, eine andere Füllmasse, beispielsweise Kunststoff, einzufüllen, der den Gewindeschaft im Bohrloch in der äußeren Schicht in seitlicher Richtung abstützt.

In bevorzugter Ausgestaltung der Erfindung besteht die Unterlegscheibe aus Kunststoff zum Schutz des Mehrschichtkörpers vor Beschädigung beim Schrauben beispielsweise einer Mutter auf den Gewindeschaft.

Das Spreizelement des erfindungsgemäßen Befestigungselements ist insbesondere als aufweitbarer Spreizring ausgebildet

Des Weiteren betrifft die Erfindung eine Anordnung mit dem in einem plattenförmigen Mehrschichtkörper verankerten, erfindungsgemäßen Befestigungselement mit den Merkmalen des Anspruchs 4. Der Mehrschichtkörper ist beispielsweise ein Mehrscheibenglas (Sicherheitsglas) oder ein Solarpaneel.

Die Erfindung wird nachfolgend anhand eines in der Zeichnung dargestellten Ausführungsbeispiels näher erläutert. Es zeigen:
- Figur 1: ein erfindungsgemäßes Befestigungselement in Explosionsdarstellung; und
- Figur 2: eine erfindungsgemäße Anordnung unter Verwendung des Befestigungs- elements aus Figur 1.

Das in der Zeichnung dargestellte, erfindungsgemäße Befestigungselement 10 weist einen Gewindeschaft 12 mit einem Spreizkonus 14 auf, der mit dem Gewindeschaft 12 einstückig an dessen einem Ende angeordnet ist. Auf den Gewindeschaft 12 ist als Spreizelement ein Spreizring 16 aufgesetzt. Der Spreizring 16 hat in Seitenansicht eine gewellte Form und lässt sich dadurch durch Aufschieben auf den Spreizkonus 14 aufweiten. Der Gewindeschaft 12 mit dem Spreizkonus 14 und der Spreizring 16 bestehen aus Stahl.

Des Weiteren weist das Befestigungselement 10 eine Unterlegscheibe 18 aus Kunststoff mit einem Mittelloch 20 auf. Die Unterlegscheibe 18 weist einen mit ihr einstückigen, rohrförmigen Kragen 19 auf, der bei richtiger Montagelage der Unterlegscheibe dem Spreizkonus 14 zugewandt ist. Der Kragen 19 wird vom Mittelloch 20 durchsetzt. Die Unterlegscheibe 18 weist einen schräg verlaufenden Kanal 22 auf, der von einer dem Spreizkonus 14 zugewandten Seite der Unterlegscheibe 18 außen zu einer dem Spreizkonus 14 abgewandten Seite der Unterlegscheibe 18 schräg nach innen verläuft. Auf der dem Spreizkonus 14 zugewandten Seite mündet der Kanal 22 am Außenumfang des Kragens 19.

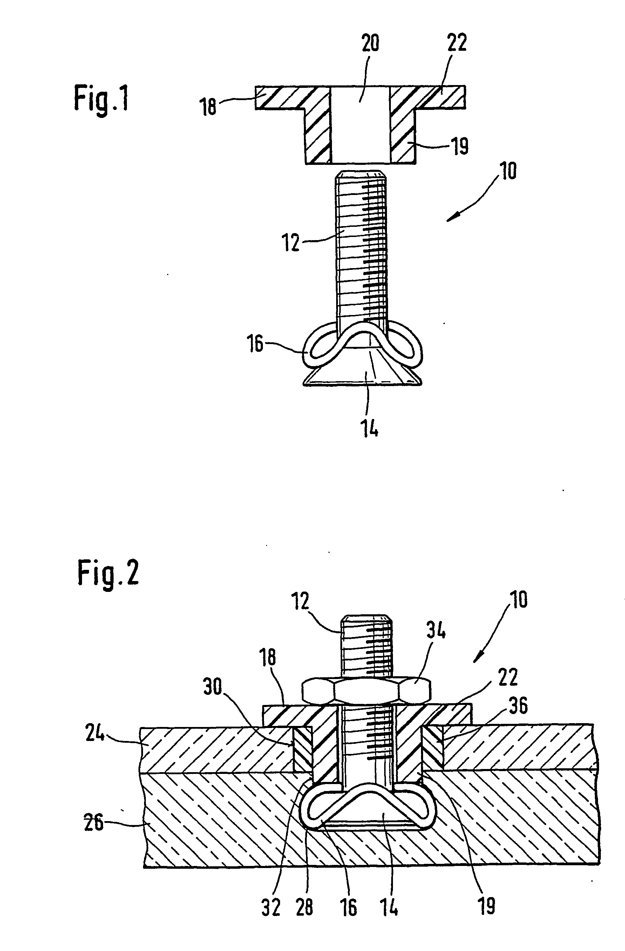

Das Befestigungselement 10 ist wie in Figur 2 dargestellt zur Verankerung in einem Mehrschichtkörper 24, 26, der eine äußere Schicht 24 und zumindest eine weitere Schicht 26 aufweist, vorgesehen. Der Mehrschichtkörper 24, 26 kann, wie in Figur 2 dargestellt, beispielsweise ein Mehrscheibenglas (Sicherheitsglas) 24, 26 oder beispielsweise auch ein nicht dargestelltes Solarpaneel sein, das üblicherweise mehrschichtig aufgebaut ist. Das Mehrscheibenglas 24, 26 weist zwei oder mehr Glasscheiben 24, 26 auf, die durch Kleben zum Mehrscheibenglas 24, 26 verbunden sind. Das Mehrscheibenglas 24, 26 begrenzt durch seine Dicke die Tiefe eines in ihm angebrachten Bohrlochs.

Zur Verankerung des Befestigungselements 10 wird ein eine Hinterschneidung 28 aufweisendes Bohrloch (Sackloch) 30, 32 im Mehrscheibenglas 24, 26 angebracht. Das Bohrloch 30, 32 wird vor dem Verkleben der beiden Glasplatten 24, 26 in jeder Glasscheibe 24, 26 getrennt angebracht, wobei die Hinterschneidung 28 im dargestellten Ausführungsbeispiel vollständig und ausschließlich in der weiteren Glasplatte 26 hergestellt ist. Nach der Herstellung des Bohrlochs 30, 32 in den Glasplatten 24, 26 werden die Glasplatten 24, 26 zum Mehrscheibenglas 24, 26 miteinander verklebt. Da sich die Glasplatten 24, 26 beim Verkleben gegeneinander verschieben können, weist das Bohrloch 30, 32 in der äußeren Glasplatte 24 einen größeren Durchmesser als in der weiteren Glasplatte 26 auf. Dadurch ist sichergestellt, dass auch bei Versatz des Bohrlochs 30 in der äußeren Glasplatte 24 gegenüber dem Bohrloch 32 in der weiteren Glasplatte 26 infolge des Verklebens der beiden Glasplatten 24, 26 das Bohrloch 30 in der äußeren Glasplatte 24 in das Bohrloch 32 in der weiteren Glasplatte 26 mündet. Des Weiteren ist durch den größeren Durchmesser des Bohrlochs 30 in der äußeren Glasplatte 24 sichergestellt, dass das Befestigungselement 10 mit dem Spreizkonus 14 und dem Spreizring 16 auch bei Versatz des Bohrlochs 30 in der äußeren Glasplatte 24 gegenüber dem Bohrloch 32 in der weiteren Glasplatte 26 durch das Bohrloch 30 in der äußeren Glasplatte 24 in die Hinterschneidung 28 in der weiteren Glasplatte 26 einsetzbar ist.

Nach dem Einsetzen des Befestigungselements 10 mit seinem Spreizkonus 14 in die Hinterschneiduntg 28 wird der auf den Gewindeschaft 12 aufgesetzte Spreizring 16 mittels eines nicht dargestellten, rohrförmigen Setzwerkzeugs auf den Spreizkonus 14 geschoben. Dabei weitet sich der Spreizring 16 auf und hintergreift die Hinterschneidung 28 formschlüssig, so dass das Befestigungselement 10 im Mehrscheibenglas 24, 26 verankert ist. Nach der Verankerung des Befestigungselements 10 wird das nicht dargestellte Setzwerkzeug abgezogen und es wird die Unterlegscheibe 18 mit dem Kragen 19 voran auf den aus dem Mehrscheibenglas 24, 26 vorstehenden Gewindeschaft 12 des Befestigungselements 10 aufgesetzt. Im Anschluss an die Unterlegscheibe 18 wird eine Mutter 34 auf den Gewindeschaft 12 bis an der Unterlegscheibe 18 anliegend aufgeschraubt. Durch den die Injektionsöffnung 22 bildenden Kanal in der Unterlegscheibe 18 wird ein Zwischenraum zwischen dem Kragen 19 der Unterlegscheibe 18 und einer Wandung des Bohrlochs 30 in der äußeren Glasplatte 24 mit einer Füllmasse 36, beispielsweise mit Silicon, verfüllt. Die Füllmasse 36 dichtet das Befestigungselement 10 im Bohrloch 30 ab, sie kann das Befestigungselement 10 auch gegen Querkräfte im Bohrloch 30 abstützen. Ggf. kann der Spreizring 16 auch mit dem Kragen 19 der Unterlegscheibe 18 durch Aufschrauben der Mutter 34 auf den Gewindeschaft 12 auf den Spreizkonus 14 aufgeschoben und dadurch aufgeweitet werden. Ein separates Setzwerkzeug ist in diesem Fall nicht notwendig.

## Patentansprüche

1. Befestigungselement (10) zur Verankerung in einem eine Hinterschneidung (28) aufweisenden Bohrloch (32) in einem plattenförmigen Mehrschichtkörper (24, 26), insbesondere einem Mehrscheibenglas oder einem Solarpaneel, mit einem einen Spreizkonus (14) aufweisenden Gewindeschaft (12), mit einem auf den Gewindeschaft (12) verschieblich aufgesetzten Spreizelement (16), das durch Aufschieben auf den Spreizkonus (14) aufweitbar ist, und mit einer auf den Gewindeschaft (12) aufsetzbaren Unterlegscheibe (18), **dadurch gekennzeichnet, dass** die Unterlegscheibe (18) eine Injektionsöffnung (22) aufweist, die auf einer Außenseite der Unterlegscheibe (18) zugänglich ist und auf einer dem Spreizkonus (14) zugewandten Seite der Unterlegscheibe (18) nahe am Umfang des Gewindeschafts (12) mündet.

2. Befestigungselement nach Anspruch 1, **dadurch gekennzeichnet, dass** die Unterlegscheibe (18) aus Kunststoff besteht.

3. Befestigungselement nach Anspruch 1, **dadurch gekennzeichnet, dass** das Spreizelement (16) ein Spreizring ist.

4. Anordnung mit einem in einem plattenförmigen Mehrschichtkörper (24, 26) verankerten Befestigungselement (10), wobei eine äußere Schicht (24) des Mehrschichtkörpers (24, 26) von einem Bohrloch (30) durchsetzt ist, das in ein eine Hinterschneidung (28) aufweisendes Bohrloch (32) in einer weiteren Schicht (26) des Mehrschichtkörpers (24, 26) mündet, wobei das Befestigungselement (10) einen Gewindeschaft (12) mit einem Spreizkonus (14) aufweist, wobei sich der Spreizkonus (14) in der Hinterschneidung (28) der weiteren Schicht (26) des Mehrschichtkörpers (24, 26) befindet, wobei auf den Spreizkonus (14) ein Spreizelement (16) aufgeschoben und **dadurch** aufgeweitet worden ist, so dass das Spreizelement (16) die Hinterschneidung (28) formschlüssig hintergreift, wobei auf den Gewindeschaft (12) eine Unterlegscheibe (18) aufgesetzt ist, die das Bohrloch (30) in der äußeren Schicht (24) des Mehrschichtkörpers (24, 26) abdeckt, wobei das Bohrloch (30) in der äußeren Schicht (24) des Mehrschichtkörpers (24, 26) einen größeren Durchmesser als der Gewindeschaft (12) des Befestigungselements (10) aufweist, **dadurch gekennzeichnet, dass** das Bohrloch (30) in der äußeren Schicht (24) des Mehrschichtkörpers (24, 26) einen größeren Durchmesser als das Bohrloch (32) in der weiteren Schicht (26) des Mehrschichtkörpers (24, 26) aufweist, dass die Unterlegscheibe (18) eine Injektionsöffnung (22) aufweist, die auf einer Außenseite der Unterlegscheibe (18) zugänglich ist und die auf einer dem Spreizkonus (14) zugewandten Seiten der Unterlegscheibe (18) im Umfangsbereich des Gewindeschafts (12) sowie in einen Zwischenraum zwischen dem Gewindeschaft (12) des Befestigungselements (10) und einer Wandung des Bohrlochs (30) in der äußeren Schicht (24) des Mehrschichtkörpers (24, 26) mündet, und dass durch die Injektionsöffnung (22) eine Füllmasse (26) in den Zwischenraum eingebracht worden ist.

5. Anordnung nach Anspruch 4, **dadurch gekennzeichnet, dass** die Füllmasse (36) eine Dichtmasse ist.

6. Anordnung nach Anspruch 4, **dadurch gekennzeichnet, dass** der Mehrschichtkörper (24, 26) ein Mehrscheibenglas (24, 26) ist.

7. Anordnung nach Anspruch 4, **dadurch gekennzeichnet, dass** der Mehrschichtkörper (24, 26) ein Solarpaneel ist.

## Claims

1. Fixing element (10) for anchoring in a drilled hole (32) having an undercut (28) in a panel-form multi-layered body (24, 26), in particular a laminated glass body or a solar panel, having a threaded shank (12) with an expander cone (14), having an expansible element (16) slidably placed on the threaded shank (12), which expansible element is expandable by being pushed onto the expander cone (14), and having a washer (18) placeable on the threaded shank (12), **characterised in that** the washer (18) has an injection opening (22) which is accessible on the outside of the washer (18) and on the side of the washer (18) facing the expander cone (14) opens close to the circumference of the threaded shank (12).

2. Fixing element according to claim 1, **characterised in that** the washer (18) is made of plastics material.

3. Fixing element according to claim 1, **characterised in that** the expansible element (16) is an expansion ring.

4. Arrangement with a fixing element (10) anchored in a panel-form multi-layered body (24, 26), wherein an outer layer (24) of the multi-layered body (24, 26) has a drilled hole (30) passing through it, which drilled hole opens into a drilled hole (32) having an undercut (28) in a further layer (26) of the multi-layered body (24, 26), the fixing element (10) comprising a threaded shank (12) with an expander cone (14), the expander cone (14) being located in the undercut (28) in the further layer (26) of the multi-layered body (24, 26), an expansible element (16) being pushed onto the expander cone (14) and thereby expanded so that the expansible element (16) engages with an interlocking fit behind the undercut (28), and a washer (18) that covers the drilled hole (30) in the outer layer (24) of the multi-layered body (24, 26) being placed on the threaded shank (12), the drilled hole (30) in the outer layer (24) of the multi-layered body (24, 26) having a larger diameter than the threaded shank (12) of the fixing element (10), **characterised in that** the drilled hole (30) in the outer layer (24) of the multi-layered body (24, 26) has a larger diameter than the drilled hole (32) in the further layer (26) of the multi-layered body (24, 26), **in that** the washer (18) has an injection opening (22) which is accessible on the outside of the washer (18) and which on the side of the washer (18) facing the expander cone (14) opens in the circumferential region of the threaded shank (12) as well as into a gap between the threaded shank (12) of the fixing element (10) and a wall of the drilled hole (30) in the outer layer (24) of the multi-layered body (24, 26), and **in that** a filling compound (26) is introduced through the injection opening (22) into the gap.

5. Arrangement element according to claim 4, **characterised in that** the filling compound (36) is a sealing compound.

6. Arrangement element according to claim 4, **characterised in that** the multi-layered body (24, 26) is a laminated glass body (24, 26).

7. Arrangement element according to claim 4, **characterised in that** the multi-layered body (24, 26) is a solar panel.

## Revendications

1. Elément de fixation (10) conçu pour l'ancrage dans un trou (32) pourvu d'une contre-dépouille (28) et pratiqué dans un corps multicouche (24, 26) en forme de plaque, en particulier dans un verre feuilleté ou dans un panneau solaire, comprenant une tige filetée (12) munie d'un cône de déploiement (14) ; un élément déployable (16) mis en place sur la tige filetée (12) avec faculté de coulissement, et pouvant être évasé par enfilement sur le cône de déploiement (14) ; et une rondelle de calage (18) pouvant être mise en place sur ladite tige filetée (12), **caractérisé par le fait que** la rondelle de calage (18) présente un orifice d'injection (22) qui est accessible sur une face extérieure de ladite rondelle de calage (18) et débouche sur un côté de ladite rondelle de calage (18) qui est tourné vers le cône de déploiement (14), à proximité du pourtour de la tige filetée (12).

2. Elément de fixation selon la revendication 1, **caractérisé par le fait que** la rondelle de calage (18) consiste en une matière plastique.

3. Elément de fixation selon la revendication 1, **caractérisé par le fait que** l'élément déployable (16) est une bague déployable.

4. Agencement équipé d'un élément de fixation (10) ancré dans un corps multicouche (24, 26) en forme de plaque, agencement dans lequel une couche extérieure (24) dudit corps multicouche (24, 26) est traversée par un trou foré (30) débouchant dans un trou (32) muni d'une contre-dépouille (28) et foré dans une autre couche (26) dudit corps multicouche (24, 26) ; dans lequel ledit élément de fixation (10) présente une tige filetée (12) pourvue d'un cône de déploiement (14), ledit cône de déploiement (14) étant situé dans la contre-dépouille (28) de l'autre couche (26) du corps multicouche (24, 26) ; dans lequel un élément déployable (16) est enfilé sur le cône de déploiement (14), et est ainsi évasé de façon telle que ledit élément déployable (16) emprisonne la contre-dépouille (28) par-derrière, par concordance de formes ; dans lequel une rondelle de calage (18), mise en place sur la tige filetée (12), occulte le trou (30) foré dans la couche extérieure (24) du corps multicouche (24, 26) ; et dans lequel ledit trou (30), foré dans ladite couche extérieure (24) dudit corps multicouche (24, 26), possède un plus grand diamètre que la tige filetée (12) de l'élément de fixation (10), **caractérisé par le fait que** le trou (30), foré dans la couche extérieure (24) du corps multicouche (24, 26), présente un plus grand diamètre que le trou (32) foré dans l'autre couche (26) dudit corps multicouche (24, 26) ; **par le fait que** la rondelle de calage (18) offre un orifice d'injection (22) qui est accessible sur une face extérieure de la rondelle de calage (18), et qui débouche sur un côté de ladite rondelle de calage (18) tourné vers le cône de déploiement (14), dans la zone du pourtour de la tige filetée (12), ainsi que dans un espace interstitiel entre ladite tige filetée (12) dudit élément de fixation (10) et une paroi du trou (30) foré dans la couche extérieure (24) du corps multicouche (24, 26) ; et **par le fait qu'**une masse de comblement (36) a été introduite dans ledit espace interstitiel par l'intermédiaire dudit orifice d'injection (22).

5. Agencement selon la revendication 4, **caractérisé par le fait que** la masse de comblement (36) est une masse d'étanchement.

6. Agencement selon la revendication 4, **caractérisé par le fait que** le corps multicouche (24, 26) est un verre feuilleté (24, 26).

7. Agencement selon la revendication 4, **caractérisé par le fait que** le corps multicouche (24, 26) est un panneau solaire.
